# EUROPÄISCHE PATENTSCHRIFT

(11) **EP 1 479 503 B1**
(45) Veröffentlichungstag und Bekanntmachung des Hinweises auf die Patenterteilung: **08.11.2006**
(21) Anmeldenummer: 04011728.5
(22) Anmeldetag: 18.05.2004
(51) Int. Cl.: B29C 45/00, B29C 45/14, F21V 9/08, F21V 5/00

(54) **Spritzgiess-Bauteil für eine Fahrzeugleuchte**
Injection moulded part for a vehicle lamp
Pièce moulée par injection pour une lampe de véhicule

(30) Priorität: 21.05.2003 DE 10322812
(43) Veröffentlichungstag der Anmeldung: 24.11.2004
(73) Patentinhaber: Hella KGaA Hueck & Co., 59552 Lippstadt (DE)
(72) Erfinder: Ulrich, Stefan, 59519 Möhnesee (DE)

(56) Entgegenhaltungen:
- EP-A- 1 265 026
- DE-U- 9 319 302
- US-A- 5 356 590
- PALINKAS L: "ZWEIFACH-SPRITZGIESSWERKZEUG WERKZEUGTECHNIK FUER EIN HECKLEUCHTENGEHAEUSE AUS ABS" KUNSTSTOFFE, CARL HANSER VERLAG. MUNCHEN, DE, Bd. 85, Nr. 11, 1. November 1995 (1995-11-01), Seiten 1872-1875, XP000538140 ISSN: 0023-5563
- "THERMOPLASTE FUER INNOVATIVE FAHRZEUGBELEUCHTUNG" ATZ AUTOMOBILTECHNISCHE ZEITSCHRIFT, FRANCKH'SCHE VERLAGSHANDLUNG. STUTTGART, DE, Bd. 105, Nr. 7/8, Juli 2003 (2003-07), Seiten 700-706, XP001154590 ISSN: 0001-2785
- PATENT ABSTRACTS OF JAPAN vol. 009, no. 094 (M-374), 24. April 1985 (1985-04-24) -& JP 59 220337 A (ICHIKO KOGYO KK), 11. Dezember 1984 (1984-12-11)
- PATENT ABSTRACTS OF JAPAN vol. 016, no. 208 (M-1249), 18. Mai 1992 (1992-05-18) -& JP 04 033811 A (NISSAN MOTOR CO LTD), 5. Februar 1992 (1992-02-05)
- PATENT ABSTRACTS OF JAPAN vol. 1996, no. 02, 29. Februar 1996 (1996-02-29) -& JP 07 276445 A (INOAC CORP), 24. Oktober 1995 (1995-10-24)
- DATABASE WPI Section Ch, Week 197707 Derwent Publications Ltd., London, GB; Class A32, AN 1977-12006Y XP002294936 -& JP 52 000853 A (SANYO ELEC KK), 6. Januar 1977 (1977-01-06)
- PATENT ABSTRACTS OF JAPAN vol. 008, no. 258 (M-340), 27. November 1984 (1984-11-27) -& JP 59 131417 A (HITACHI SEISAKUSHO KK), 28. Juli 1984 (1984-07-28)
- PATENT ABSTRACTS OF JAPAN vol. 017, no. 172 (M-1392), 2. April 1993 (1993-04-02) -& JP 04 331118 A (DAIKYO INC), 19. November 1992 (1992-11-19)
- PATENT ABSTRACTS OF JAPAN vol. 003, no. 063 (C-047), 30. Mai 1979 (1979-05-30) -& JP 54 038353 A (TOYODA GOSEI CO LTD), 22. März 1979 (1979-03-22)
- PATENT ABSTRACTS OF JAPAN vol. 0130, no. 83 (M-802), 27. Februar 1989 (1989-02-27) -& JP 63 281815 A (MATSUSHITA ELECTRIC IND CO LTD), 18. November 1988 (1988-11-18)
- PATENT ABSTRACTS OF JAPAN vol. 017, no. 172 (M-1392), 2. April 1993 (1993-04-02) -& JP 04 331119 A (DAIKYO INC), 19. November 1992 (1992-11-19)
- ROSATO D V ED - INSTITUTE OF ELECTRICAL AND ELECTRONICS ENGINEERS: "Injection Molding Handbook" PROCEEDINGS OF THE 1998 IEEE COMPUTER SOCIETY CONFERENCE ON COMPUTER VISION AND PATTERN RECOGNITION. CVPR '98. SANTA BARBARA, CA, JUNE 23 - 25, 1998, IEEE COMPUTER SOCIETY CONFERENCE ON COMPUTER VISION AND PATTERN RECOGNITION, LOS ALAMITOS, CA : IEEE, Bd. CONF. 17, 1998, Seiten 614-615, XP002266709 ISBN: 0-7803-5063-4
- "ARTIKELGESTALUNG UND WERKZEUGKONSTRUKTION BEI DER SPRITZGUSSVERARBEITUNG VON NIEDERDRUCK-POLYAETHYLEN UND POLYPROPYLEN" PLASTVERARBEITER, ZEHNER AND HUETHIG VERLAG, SPEYER AM RHEIN, DE, Bd. 12, Nr. 10, Oktober 1961 (1961-10), Seiten 453-458,504, XP001173327 ISSN: 0032-1338
- BEALL G: "PLASTIC PART DESIGN FOR ECONOMICAL INJECTION MOULDING. PART 3-INCORPORATING HOLES & BOSSES" DESIGN ENGINEERING, MORGAN-GRAMPIAN LTD. LONDON, GB, 1. September 1985 (1985-09-01), Seiten 75-76,78,80, XP002036568 ISSN: 0308-8448

## Beschreibung

Die Erfindung betrifft ein Spritzgieß-Bauteil für eine Fahrzeugleuchte nach dem Oberbegriff des Patentanspruchs 1.

Aus der DE 44 45 766 A1 ist ein Spritzgieß-Bauteil für eine Fahrzeugleuchte bekannt. Das Spritzgieß-Bauteil ist als eine Lichtscheibe ausgeführt, die einen ersten Bauteilabschnitt umfasst, der großflächig ausgebildet ist und im wesentlichen das Fahrzeugleuchtengehäuse bzw. die Karosserieöffnung des Fahrzeugs abdeckt. Von dem ersten Bauteilabschnitt ragt im Randbereich desselben ein zweiter Bauteilabschnitt ab, der zur Befestigung der Lichtscheibe an dem Leuchtengehäuse dient. Zur Gewährleistung einer ausreichenden Stabilität sind die Wandungen des zweiten Bauteilabschnitts zu der Wandung der ersten Bauteilabschnitts relativ dick ausgebildet. In Folge der Materialanhäufung in dem Verbindungsbereich des ersten Bauteilabschnitts und des zweiten Bauteilabschnitts während des Spritzvorgangs kann es an der Oberfläche des ersten Bauteilabschnitts zu einer unerwünschten Einfallstelle kommen. Die in Form einer Mulde ausgebildete Einfallstelle an der Oberfläche des ersten Bauteilabschnitts entsteht durch Nachschwinden beim Abkühlen bzw. Erhärten der in das Formwerkzeug eingespritzten Kunststoffschmelze. Zur Vermeidung solcher Einfallstellen sieht das bekannte Herstellungsverfahren vor, dass in einem ersten Spritzgießschritt der erste Bauteilabschnitt und in einem nachfolgenden zweiten Spritzgießschritt der zweite Bauteilabschnitt an den ersten Bauteilabschnitt angeformt wird. Nachteilig an dem bekannten Verfahren ist, dass hierdurch der Herstellungsaufwand wesentlich erhöht wird. Es sind zum einen zwei Werkzeugformen erforderlich und zum anderen erhöht sich in Folge des zwischenzeitlichen Abkühlens der Kunststoffschmelze die Herstellungsprozesszeit.

Aus dem Artikel "Zweifach-Spritzgießwerkzeug - Werkzeugtechnik für ein Heckleuchtengehäuse aus ABS" von L. Palinkas, Carl Hanser Verlag, München, vom 01.11.1995, Seiten 1872 bis 1875 ist bekannt, ein Befestigungselement mit einem ersten Bauteilabschnitt und einem zweiten Bauteilabschnitt eines Spritzgieß-Bauteils zu umspritzen. Der das Befestigungselement in Umfangsrichtung umgebende zweite Bauteilabschnitt ist als ein Dom ausgebildet. Nachteilig an dem bekannten Spritzgieß-Bauteil ist, dass zur Vermeidung von Einfallstellen an dem ersten Bauteilabschnitt zusätzliche Verdrängungsschieber vorgesehen sein müssen, damit es nicht zu Masseanhäufungen kommt.

Aus der DE 93 19 302 U1 ist ein stiftartiges Halteelement aus Metall bekannt, das zur Verbindung eines metallischen Anbauteils mit einem aus einem spröden Kunststoffmaterial hergestellten Trägerteil dient. Eine Umspritzung des Halteelementes ist nicht vorgesehen.

Aus der Denivent-Zusammenfassung AN-1977-12006Y zu der JP 52 000853 Ai ist ein Spritzgieß-Bauteil mit einem stiftförmigen Kernteil vorgesehen, der an einem zu einem ersten Bauteilabschnitt zugewandten Ende einen Verbreiterungsabschnitt aufweist. Das stiftförmige Kernteil ist jedoch hohlförmig ausgebildet und nicht als Gewindestift einsetzbar.

Aus der JP 04331118 A ist ein Spritzgieß-Bauteil mit einer teilweise umspritzen Schraube bekannt. Die Schraube liegt mit einem verbreiterten Kopfteil an einem ersten Bauteilabschnitt des Spritzgieß-Bauteils an. Ein verbreiterter Mittelabschnitt der Schraube ist nicht vorgesehen.

Aus der JP 63281815 A ist ein Spritzgieß-Bauteil bekannt, das zur Vermeidung von Materialanhäufungen an einer Verbindungsstelle zwischen einem ersten Bauteilabschnitt und einem im rechten Winkel dazu angeordnetenzweiten Bauteilabschnitt desselben verdünnt ausgebildet ist. Die Integration eines Gewindestiftes ist nicht vorgesehen.

Aus der JP 59220337 A ist ein Spritzgieß-Bauteil bekannt, das als zweiten Bauteilabschnitt einen Dom mit sternförmig angeordneten Rippen aufweist. Ein Gewindestift ist in dem Spritzgieß-Bauteil nicht integriert angeordnet. Vergleichbare Ausführungen hierzu sind bekannt aus dem Artikel "Artikelgestaltung und Werkzeugkonstruktion bei der Spritzgußverarbeitung von Niedruck-Polyaethylen und Polypropylen", Der Plastverarbeiter, Huethig Verlag, Band 12, Nr. 10, Oktober 1961, Seiten 453-458 und aus dem Artikel "Injection Molding Handbook" von Rosato D V ED Institute of Electrical and Electronics Engineers, Seiten 614-615.

Aufgabe der vorliegenden Erfindung ist es, ein Spritzgieß-Bauteil sowie ein Verfahren zur Herstellung desselben anzugeben, so dass zum einen zuverlässig die Ausbildung von Einfallstellen an einer Oberfläche des Spritzgieß-Bauteils verhindert wird und zum anderen der Herstellungsaufwand möglichst gering ist.

Zur Lösung dieser Aufgabe weist die Erfindung die Merkmale des Patentanspruchs 1 auf.

Nach der Erfindung ist in einem Verbindungsbereich des ersten Bauteilabschnitts und des zweiten Bauteilabschnitts des Spritzgieß-Bauteils ein Blockierungsmittel vorgesehen, so dass eine Materialanhäufung an der Anbindungsstelle zwischen dem ersten Bauteilabschnitt und dem zweiten Bauteilabschnitt vermieden wird. Infolgedessen kann ein Nachschwinden an der unmittelbar angrenzenden Wandung des ersten Bauteilabschnitts mit der unerwünschten Wirkung des Eintretens von Einfallstellen nicht eintreten. Grundgedanke der Erfindung ist es, ein Blockierungsmittel derart auszugestalten, dass eine Materialanhäufung bzw. ein Nachschwinden an der Verbindungsstelle zwischen dem ersten Bauteilabschnitt und dem zweiten Bauteilabschnitt vermieden wird. Vorteilhaft kann somit das Spritzgieß-Bauteil in einem einzigen Spritzgießschritt erzeugt werden.

Nach der Erfindung ist der zweite Bauteilabschnitt des Spritzgieß-Bauteils als ein im wesentlichen senkrecht zum ersten Bauteilabschnitt abragender Dom ausgebildet, in dem ein Befestigungselement zur Verbindung des Spritzgieß-Bauteils an einem Gehäuse gehalten ist. Der Dom besteht zum einen aus einem dünnen Wandungsabschnitt und zum anderen aus einem dicken Wandungsabschnitt, wobei vorzugsweise sich der dünne und der dicke Wandungsabschnitt in Umfangsrichtung des Doms abwechseln. Der dünne und der dicke Wandungsabschnitt begrenzen zumindest an der Verbindungsstelle zwischen dem ersten und zweiten Bauteilabschnitt das Blockierungsmittel. Der dünne Wandungsabschnitt ist im Vergleich zu der Wandstärke des ersten Bauteilelementes sehr dünn ausgebildet. Er bildet im Vergleich zu dem dicken Wandungsabschnitt einen relativ großen Umfangsbereich des Domes. Der dicke Wandungsabschnitt ist vorzugsweise als Rippe ausgebildet und dient zur Stabilität des Domes im Vergleich zu dem ersten Bauteilabschnitt bzw. dem Befestigungselement. Des weiteren ermöglicht der dicke Wandungsabschnitt, dass während des Spritzgießvorganges der Zwischenraum zwischen dem Formwerkzeugteil und dem Blockierungsmittel relativ schnell aufgefüllt werden kann.

Nach der Erfindung ist das Befestigungselement als ein Gewindestift ausgebildet, der zumindest auf einer dem ersten Bauteilabschnitt abgewandten freien Seite mit einem Außengewinde versehen ist. Das Spritzgieß-Bauteil kann somit durch Verschraubung mit einem Gehäuse der Fahrzeugleuchte verbunden sein. Auf einer dem ersten Bauteilabschnitt zugewandten Seite ist das Befestigungselement mit einem tellerartigen Verbreiterungsende (Kopf) versehen, das als Blockierungsteil dient und eine Innenseite des ersten Bauteilabschnitts begrenzt. Der Durchmesser des Verbreiterungsendes ist minimal kleiner als der Innendurchmesser des dünnen Wandungsabschnitts des Doms. Je kleiner die Differenz zwischen dem Durchmesser des Verbreiterungsendes und dem Innendurchmesser des dünnen Wandungsabschnitts ist, desto größer ist die Wahrscheinlichkeit, dass keine Einfallstelle an der Außenseite des ersten Bauteilabschnitts entsteht.

Zwei Ausführungsbeispiele der Erfindung werden nachfolgend anhand der Zeichnungen näher erläutert.

Es zeigen:
- Figur 1: eine perspektivische Teilansicht eines Spritzgieß-Bauteils nach einer ersten Ausführungsform mit einem flächigen ersten Bauteilabschnitt und einem domförmig von demselben abragenden zweiten Bauteilabschnitt nach einer ersten Ausführungsform,
- Figur 2: einen Längsschnitt durch den zweiten Bauteilabschnitt gemäß Figur 1,
- Figur 3: einen Querschnitt durch den zweiten Bauteilabschnitt entlang der Linie III-III in Figur 2,
- Figur 4: eine Seitenansicht des teilweise umspritzten Befestigungselementes nach Figur 1 bis 3 und
- Figur 5: einen Längsschnitt durch einen zweiten Bauteilabschnitt nach einer zweiten Ausführungsform.

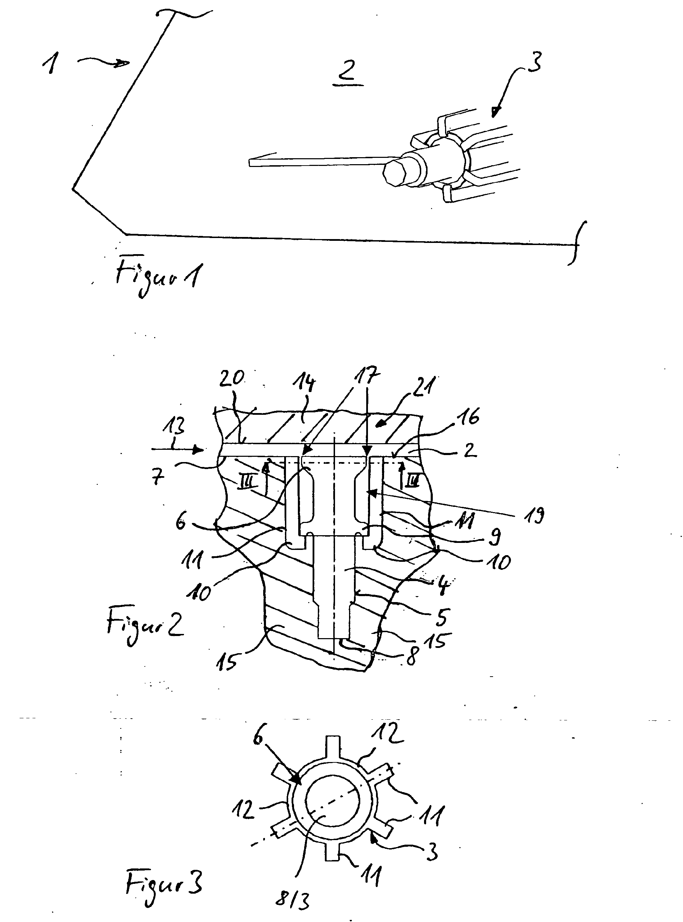

In Figur 1 ist ein Spritzgieß-Bauteil 1 dargestellt, das als eine von außen sichtbare Gehäusefläche einer Fahrzeugleuchte ausgebildet ist. Diese Gehäusefläche ist vorzugsweise mit einer transparenten Lichtscheibe stoffschlüssig verbunden.

Die Fahrzeugleuchte kann beispielsweise als Rückfahrleuchte, Bremsleuchte etc. oder als Scheinwerfer ausgebildet sein. Darüber hinaus ist die Erfindung überall dort anwendbar, wo flächige Kunststoffteile mit einem weiteren Bauteil lösbar verbunden werden sollen, wie z.B. Blenden und dekorative Kunststoffteile.

Das Spritzgieß-Bauteil 1 gemäß Figur 1 besteht im wesentlichen aus einem flächigen ersten Bauteilabschnitt 2 (Gehäusefläche), der sich über die Öffnung eines nicht dargestellten Gehäuses der Fahrzeugleuchte, in dem eine Lichtquelle angeordnet ist, erstreckt. Zur Befestigung mit dem Gehäuse ragt abschnittsweise oder punktuell von dem ersten Bauteilabschnitt 2 ein zweiter Bauteilabschnitt 3 in einem Winkel, vorzugsweise in einem rechten oder spitzen Winkel, ab. Der zweite Bauteilabschnitt 3 kann als durchgehender Rand des Spritzgieß-Bauteils 1 oder wie in Figur 1 dargestellt, als ein Dom 3 ausgebildet sein, der sich hohlzylinderförmig aus der Ebene des ersten Bauteilabschnitts 2 erhebt.

In dem Dom 3 ist ein Befestigungselement 4 eingeformt, das als Gewindestift ausgebildet ist und sich zumindest mit einem Außengewinde 5 außerhalb des Doms 3 erstreckt. Der Stift 4 erstreckt sich mit einem Verbreiterungsende 6 unmittelbar von einer Innenseite 7 des ersten Bauteilabschnitts 2 zu einem freien Ende 8, wobei etwa die Hälfte des Stiftes 4 von dem Dom 3 umfasst ist. Das Verbreiterungsende 6 bildet zugleich einen Kopf des Gewindestiftes. Der Kopf bildet ein Blockierungsmittel zur Verhinderung einer Materialanhäufung während des Spritzgießvorganges, so dass eine Einfallstelle an einer Außenseite 20 des ersten Bauteilabschnitts 2 im Bereich der Verbindungsstelle 21 zu dem zweiten Bauteilabschnitt 3 verhindert wird. In einem mittleren Abschnitt des Gewindestiftes 4 weist derselbe einen Haltering 9 auf, der von winkelförmigen Enden 10 sich in Umfangsrichtung des Doms 3 verteilt angeordneter Rippen 11 hintergriffen ist. Die Rippen 11 erstrecken sich sternförmig in Umfangsrichtung des Doms 3. Sie bilden dicke Wandungsabschnitte, die mittels relativ dünner Wandungsabschnitte 12 des Doms 3 in Umfangsrichtung miteinander verbunden sind. Die Länge der dünnen Wandungsabschnitte 12 ist wesentlich länger als die Erstreckung der dicken Wandungsabschnitte 11 in Umfangsrichtung. Die Rippen 11 dienen zur Stabilisierung des Doms 3 bzw. des Stiftes 4.

Die Rippen 11 erstrecken sich vorzugsweise gleich verteilt und koaxial zu dem Dom 3 in Umfangsrichtung desselben.

Die Herstellung des Spritzgieß-Bauteils 1 wird im Folgenden anhand der Figur 2 näher erläutert. Eine Kunststoffschmelze wird in Pfeilrichtung 13 in einen Formraum eines durch einen ersten Werkzeugteil 14 und zweiten Werkzeugteil 15 gebildeten Formwerkzeug eingespritzt. Die Einspritzrichtung 13 entspricht der Erstreckungsebene des ersten Bauteilabschnitts 2.

Bevor der Spritzgießvorgang begonnen wird, wird in das zweite Werkzeugteil 15 das Befestigungselement 4 eingelegt. Das freie Ende des Kopfes 6 des Befestigungselementes 4 ist bündig zu einer Randseite 16 des zweiten Werkzeugteils 15 angeordnet. Hierdurch ist gewährleistet, dass die Wandstärke des ersten Bauteilabschnitts 3 im Verbindungsbereich 21 zu der Wandstärke des ersten Bauteilabschnitts 3 außerhalb des Verbindungsbereichs 21 korrespondiert. Der Durchmesser des Befestigungselementes 4 ist derart gewählt, dass ein Zwischenraum 19 zwischen einer Wandung des zweiten Werkzeugteils 15 und dem Kopf 6 relativ gering ist. Es wird ein relativ schmaler und ringförmiger Spaltabschnitt 17 gebildet, der von relativ kurzen, aber breiten Verbreiterungsabschnitten 11 unterbrochen ist. Diese Verbreiterungsabschnitte 11 bilden nach Erkalten der Kunststoffschmelze die Rippen des zweiten Bauteilabschnitts 3.

Zur Verhinderung einer Einfallstelle an der Außenseite 20 des ersten Bauteilabschnitts 2 wird die Breite des Spaltabschnitts 17 relativ klein gewählt. Im weiteren Verlauf des Befestigungselementes 4 kann der Zwischenraum 19 eine größere Breite aufweisen, um die erforderliche Stabilität zu erlangen. Durch die Geometrie des Befestigungselementes 4, insbesondere des als Blockierungsmittel bzw. Blockierungselement ausgebildeten Kopfes 6, des zweiten Bauteils 3 wird sichergestellt, dass keine Materialanhäufung an der Verbindungsstelle 21 mit den zuvor beschriebenen unerwünschten Folgen entstehen kann.

Nach Erkalten der Kunststoffschmelze ist das Spritzgieß-Bauteil 1 unter Bildung des ersten Bauteilabschnitts 2 und des zweiten Bauteilabschnitts 3 geformt, wobei das Befestigungselement 4 lagesicher im wesentlichen durch den zweiten Bauteilabschnitt 3 umspritzt ist. Das Spritzgieß-Bauteil 1 kann dann weiteren Maßnahmen zur Montage der Fahrzeugleuchte zugeführt werden.

Das Spritzgieß-Bauteil 1 kann als glasklares oder eingefärbtes Kunststoffbauteil, vorzugsweise aus Polycarbonat oder PMMA, ausgebildet sein.

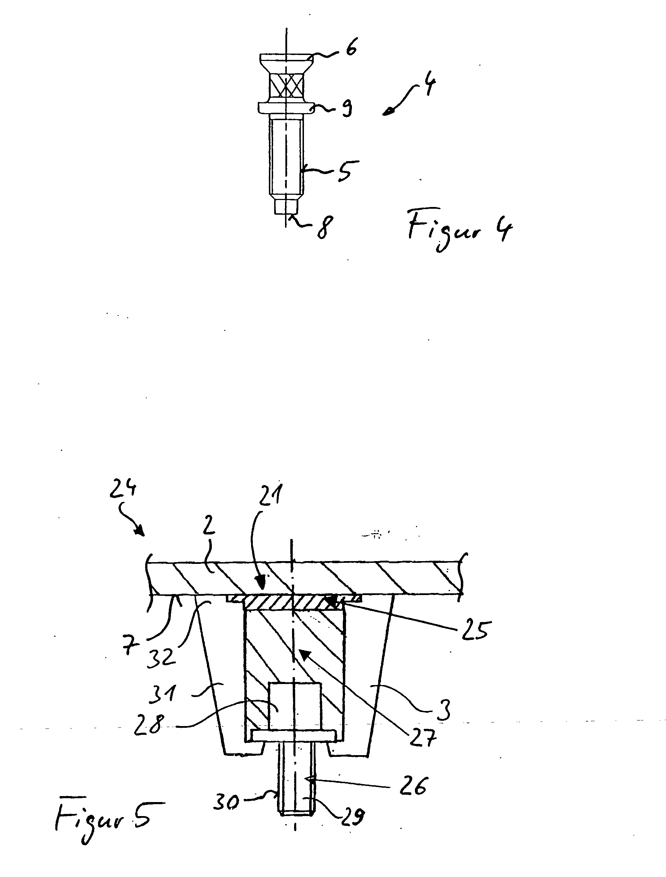

Nach einer zweiten Ausführungsform eines Spritzgieß-Bauteils 24 gemäß Figur 5 ist ein Blockierungsmittel 25 nicht einstückig mit einem Befestigungselement 26 verbunden, sondern als flaches Einlegeelement (Einlegescheibe) zur Begrenzung der Innenseite 7 des ersten Bauteilabschnitts 2 in das Formwerkzeug eingelegt. Eine Materialanhäufung kann somit nicht an der Verbindungsstelle 21 zwischen dem ersten Bauteilabschnitt 2 und dem zweiten Bauteilabschnitt 3 eintreten. Eine Materialanhäufung 27 entsteht lediglich auf einer dem ersten Bauteilabschnitt 2 abgewandten Seite der Einlegescheibe 25.

Gleiche Funktionsbauteile der zweiten Ausführungsform zu der ersten Ausführungsform sind mit den gleichen Bezugsziffern versehen.

Im vorliegenden Ausführungsbeispiel ist das Befestigungselement 26 mit einem relativ kurzen Sockel 28 versehen, der durch den zweiten Bauteilabschnitt 3 vollständig umspritzt ist. Das Befestigungselement 26 weist, wie das Befestigungselement 4 des ersten Ausführungsbeispiels, einen Schaft 29 mit einem Außengewinde 30 auf, damit das Spritzgieß-Bauteil 24 in üblicher Form an dem Gehäuse der Fahrzeugleuchte befestigt werden kann. Vorteilhaft kann das Blockierungsmittel 25, wenn es sich um ein Einlegelement geringer Dicke handelt, breiter ausgebildet sein als der Innendurchmesser des zweiten Bauteilabschnitts 3. Im vorliegenden Ausführungsbeispiel sind Rippen 31 des zweiten Bauteilabschnitts 3 in einem Fußbereich 32 breiter ausgebildet, so dass ausreichend Kunststoffschmelze in den Formraum zur Bildung des zweiten Bauteilabschnitts 3 einfließen kann.

## Patentansprüche

1. itzgieß-Bauteil für eine Fahrzeugleuchte mit einem ersten Bauteilabschnitt (2) und einem zweiten Bauteilabschnitt (3), wobei der erste Bauteilabschnitt (2) mit einer Oberfläche desselben in einem Winkel zu dem zweiten Bauteilabschnitt (3) angeordnet ist, und wobei der zweite Bauteilabschnitt (3) als ein Dom (3) ausgebildet ist, der durch Umspritzen eines entlang des Doms (3) verlaufenden Befestigungselementes herstellbar ist, **dadurch gekennzeichnet, dass** das Befestigungselement als ein Gewindestift (4) ausgebildet ist, der auf einer dem ersten Bauteilabschnitt (2) zugewandten Seite mit einem Verbreiterungsende (6) an einer Innenseite (7) des ersten Bauteilabschnitts (2) anliegt, wobei das Verbreiterungsende (6) ein Blockierungsmittel zur Verhinderung einer Materialanhäufung während des Spritzgießvorgangs bildet, und der in einem mittleren Abschnitt einen Haltering (9) aufweist, der von winkelförmigen Enden (10) von sich in Umfangsrichtung verteilt angeordneten Rippen (11) des Doms (3) hintergriffen ist, und der sich mit einem Außengewinde (5) außerhalb des Doms (3) erstreckt, dass der Dom (3) zum einen einen dünnen Wandungsabschnitt (12) und zum anderen einen dicken Wandungsabschnitt (11) aufweist, wobei der dicke Wandungsabschnitt (11) als eine Mehrzahl von sternförmig und koaxial zu dem Gewindestift (4) angeordneten Rippen (11) ausgebildet ist.

## Claims

1. Injection moulded part for a vehicle lamp, having a first component section (2) and a second component section (3), the first component section (2) being arranged with one surface thereof at an angle to the second component section (3), and the second component section (3) being configured as a dome (3) which can be produced by encapsulating a fastening element running along the dome (3), **characterised in that** the fastening element is configured as a threaded pin (4) which on a side facing the first component section (2) rests by a widening extremity (6) against an inner face (7) of the first component section (2), the widening extremity (6) forming a blocking means for preventing a build-up of material during the injection moulding operation, and which in a central portion incorporates a holding ring (9) which is grasped from behind by angular extremities (10) of fins (11) distributed around the circumference of the dome (3), and which extends outside the dome (3) by an external thread (5), and **in that** the dome (3) on the one hand incorporates a thin wall portion (12) and on the other hand a thick wall portion (11), the thick wall portion (11) being configured as a plurality of fins (11) arranged in the shape of a star and coaxially with the threaded pin (4).

## Revendications

1. Composant moulé par injection pour un feu de véhicule, comportant un premier tronçon de composant (2) et un deuxième tronçon de composant (3), le premier tronçon de composant (2) étant agencé avec une surface de celui-ci sous un angle par rapport au deuxième tronçon de composant (3), et le deuxième tronçon de composant (3) étant réalisé sous forme de dôme (3) qui peut être réalisé par enrobage par injection d'un élément de fixation s'étendant le long du dôme (3), **caractérisé en ce que** l'élément de fixation est réalisé sous forme d'une goupille filetée (4) qui est en appui sur un côté tourné vers le premier tronçon de composant (2) par une extrémité d'élargissement (6) contre une face intérieure (7) du premier tronçon de composant (2), l'extrémité d'élargissement (6) formant un moyen de blocage pour empêcher une accumulation de matière pendant le moulage par injection, et qui présente dans un tronçon médian une bague de retenue (9) qui est engagée par l'arrière par des extrémités (10) en forme d'angles de nervures (11) du dôme (3), nervures réparties en direction périphérique, et qui s'étend avec un filetage (5) en dehors du dôme (3), **en ce que** le dôme présente d'une part un tronçon de paroi (12) mince et d'autre part un tronçon de paroi épais (11), le tronçon de paroi épais (11) étant réalisé sous forme d'une multitude de nervures (11) agencées en forme d'étoile et coaxialement à la goupille filetée (4).
